# EUROPEAN PATENT APPLICATION

(11) **EP 0 993 192 A2**
(43) Date of publication of application: **12.04.2000**
(21) Application number: 99119699.9
(22) Date of filing: 05.10.1999
(51) Int. Cl.: H04N 7/18

(54) **Underwater imaging system**

(30) Priority: 09.10.1998 JP 28765598
(71) Applicant: Matsushita Electric Industrial Co., Ltd., Kadoma-shi, Osaka 571-8501 (JP)
(72) Inventor: Hane, Toshihide, Mishima-gun, Osaka 618-0001 (JP); Hashimoto, Susumu, Moriyama-shi, Shjiga 524-0036 (JP); Mori, Kazuhiro, Kantano-shi, Osaka 576-0021 (JP)
(74) Representative: Grünecker, Kinkeldey, Stockmair & Schwanhäusser Anwaltssozietät

(57) **Abstract**

An underwater imaging system of the present invention includes: an imager, which is disposed in the water for imaging an underwater scene; a receiver, which is disposed on the water or on the ground, includes a power supply and displays the underwater scene imaged by the imager as a video; and an electric signal line for connecting the imager and the receiver together, supplying power from the power supply of the receiver to the imager and transmitting an electric video signal from the imager to the receiver. The imager includes: a waterproof housing case with a transparent plate; an optical element disposed inside the housing case for producing an optical image of the underwater scene seen through the transparent plate; a photoelectric transducer disposed inside the housing case for creating signal charges corresponding to the optical image produced by the optical element and generating an electric signal based on the signal charges; and a signal processor disposed inside the housing case for transforming the electric signal that has been generated by the photoelectric transducer into the electric video signal and for outputting the electric video signal through the electric signal line.

## Description

### BACKGROUND OF THE INVENTION

The present invention relates to an underwater imaging system for watching a scene under or on the bottom of water with or without aquatic creatures like fishes living there.

It is a lot of fun to observe the behavior of aquatic creatures like fishes living under or on the bottom of the water such as sea, lakes and ponds. Aquatic watching of this type, however, almost always depends on a video that has been recorded underwater by a diver using an underwater camera.

That is to say, if an ordinary non-diver person wants to image aquatic creatures, he or she has to submerge an underwater camera to watch them. However, how hard he or she tries, it is very difficult for him or her to watch the creatures to his or her heart's content because of too many limitations.

Also, it is one of every fisherman's long-cherished desires to watch a fish rising to the bait put on a fishhook. Nevertheless, this has been just a dream considering the structure of conventional fishing tackle including a fishline, a fishhook attached to the far end of the fishline, and a lead.

According to a proposed method of imaging a fish rising to bait, a waterproof underwater camera is submerged in advance separately from the fishline. However, it is extremely difficult to control the wire suspending the camera in such a manner as to locate the camera just in front of the target aquatic creature or to control both the fishline and the underwater camera alike.

Thus, an underwater imaging system disclosed in Japanese Laid-Open Publication No. 10-113109 includes: a small-sized television camera (i.e., an exemplary imager); a monitor (i.e., an exemplary receiver); and a fishline made of an optical fiber (i.e., exemplary signal line). The camera is used for imaging aquatic creatures. A video recorded by the camera is presented on the monitor positioned on the ground. And the fishline is adapted to transmit control information, which has been input into the monitor, as an optical signal to the camera, and to receive the information about the video recorded by the camera as an optical signal at the monitor.

However, since an optical fiber lacks in flexibility, the optical fiber fishline is difficult to handle and easy to fracture.

Also, since this is a system intended to exchange an optical signal between the monitor and the television camera, a converter for converting an electric signal into an optical signal and a power supply for driving the converter should be built in the camera. As a result, the television camera cannot be small any longer in such a case.

If the small-sized television camera is built in a float, then a fish rising to bait cannot be watched deep under the water, because the camera is too distant from the fishhook in such a situation. But even if the camera is built in a lure, the target fish cannot be watched either, because the camera is too close to the fishhook this time.

### SUMMARY OF THE INVENTION

An object of the present invention is providing a downsized underwater imager with an easily controllable signal line connecting the imager to a receiver positioned on the ground.

To achieve this object, an underwater imaging system according to the present invention includes: an imager, which is disposed in the water for imaging an underwater scene; a receiver, which is disposed on the water or on the ground, includes a power supply and displays the underwater scene imaged by the imager as a video; and an electric signal line for connecting the imager and the receiver together, supplying power from the power supply of the receiver to the imager and transmitting an electric video signal from the imager to the receiver. The imager includes: a waterproof housing case with a transparent plate; an optical element disposed inside the housing case for producing an optical image of the underwater scene seen through the transparent plate; a photoelectric transducer disposed inside the housing case for creating signal charges corresponding to the optical image produced by the optical element and generating an electric signal based on the signal charges; and a signal processor disposed inside the housing case for transforming the electric signal that has been generated by the photoelectric transducer into the electric video signal and for outputting the electric video signal through the electric signal line.

In the underwater imaging system according to the present invention, the receiver disposed on the water or on the ground includes a power supply. And the electric signal line is used for supplying power from the power supply of the receiver to the imager and transmitting an electric video signal from the imager to the receiver. Accordingly, the imager disposed in the water needs no power supply, and can be downsized. In addition, since no optical fiber is needed to exchange an optical signal between the imager and the receiver, the signal line can be controlled more easily.

In one embodiment of the present invention where an underwater scene should be imaged toward the bottom of the water, the underwater imaging system preferably further includes means for adaptively moving the barycenter of the imager such that the transparent plate faces down toward the bottom of the water.

In this particular embodiment where the transparent plate faces down toward the bottom of the water, one end of the electric signal line, which is closer to the imager, preferably extends inside the housing case downward from the top of the case and is preferably connected to the signal processor.

In another embodiment where the transparent plate faces down toward the bottom of the water, the underwater imaging system preferably further includes: bait storage for storing bait therein; and means attached to the lower bottom of the housing case for holding the bait storage at a position under the center of the transparent plate and making the bait storage face down toward the bottom of the water.

In still another embodiment where the transparent plate faces down toward the bottom of the water, the underwater imaging system preferably further includes: a fishline with fishhooks, which is attached to the bottom of the housing case; and a lead for holding the fishline at a position under the center of the transparent plate and making the fishline face down toward the bottom of the water.

In this case, the underwater imaging system preferably further includes: a main fishline for suspending and holding the housing case in the water; and a coupler for coupling the electric signal line and the main fishline together when these lines move downward and for separating the electric signal line and the main fishline from each other when these lines move upward.

In another embodiment of the present invention where an underwater scene should be imaged toward the surface of the water, the underwater imaging system preferably further includes means for adaptively moving the barycenter of the imager such that the transparent plate faces up toward the surface of the water.

In this particular embodiment where the transparent plate faces up toward the surface of the water, one end of the electric signal line, which is closer to the imager, preferably extends inside the housing case downward from the top of the case and is preferably connected to the signal processor.

In another embodiment where the transparent plate faces up toward the surface of the water, one end of the electric signal line, which is closer to the imager, preferably extends inside the housing case upward from the bottom of the case and is preferably connected to the signal processor. And the electric signal line is preferably provided with a holder for holding the housing case.

In still another embodiment where the transparent plate faces up toward the surface of the water, the underwater imaging system preferably further includes: a main fishline for suspending and holding the housing case in the water; a fishline with fishhooks, which is held by the main fishline at a position closer to the surface of the water over the center of the transparent plate; and a signal line supporting member, which is attached to the main fishline so as to extend horizontally and supports the electric signal line such that the signal line passes beside the fishhooks.

In this case, the underwater imaging system preferably further includes a coupler for coupling the electric signal line and the main fishline together when these lines move downward and for separating the electric signal line and the main fishline from each other when these lines move upward.

In still another embodiment, the electric signal line preferably includes marks provided at regular intervals.

In still another embodiment, the underwater imaging system preferably further includes a main fishline for suspending and holding the housing case in the water. And the electric signal line is preferably provided with a groove in which the main fishline is storable.

In still another embodiment, the imager preferably further includes: a light emitter disposed inside of the housing case for illuminating a region in front of the transparent plate; and a light-blocking plate disposed inside the housing case for blocking light between the light emitter and the optical element.

In still another embodiment, the imager preferably further includes means for holding a removable illuminator for illuminating a region in front of the transparent plate. The holding means is disposed on an outer side of the housing case.

In still another embodiment, the imager preferably further includes a drying agent placed inside the housing case.

In still another embodiment, the imager is preferably provided with a mark on an outer side of the housing case, the mark indicating which side of the video imaged by the imager is up.

In still another embodiment, the periphery of the housing case is preferably provided with holes, on/from which hooks are attachable and removable.

### BRIEF DESCRIPTION OF THE DRAWINGS

Figure **1** illustrates an overall arrangement of an underwater imaging system according to a first embodiment of the present invention.
Figure **2** illustrates in detail how an electric signal line is coupled according to respective embodiments of the present invention.
Figure **3** illustrates an overall arrangement of an underwater imaging system according to a second embodiment of the present invention.
Figure **4** illustrates an overall arrangement of an underwater imaging system according to a third embodiment of the present invention.
Figure **5** illustrates an overall arrangement of an underwater imaging system according to a fourth embodiment of the present invention.
Figure **6** illustrates an imager of an underwater imaging system according to a fifth embodiment of the present invention.
Figure **7** illustrates an imager of an underwater imaging system according to a sixth embodiment of the present invention.
Figure **8** illustrates an imager and an electric signal line of an underwater imaging system according to a seventh embodiment of the present invention.
Figure **9** illustrates an overall arrangement of an underwater imaging system according to an eighth embodiment of the present invention.
Figure **10** illustrates an overall arrangement of an underwater imaging system according to a ninth embodiment of the present invention.
Figure **11(a)** illustrates in detail a coupler for the underwater imaging system according to the ninth embodiment; and
Figure **11(b)** is a cross-sectional view of the coupler taken along the line **XIb-XIb** shown in Figure **11(a)**.
Figure **12** illustrates an imager and an electric signal line of an underwater imaging system according to a tenth embodiment of the present invention.
Figure **13** illustrates an imager and an electric signal line of an underwater imaging system according to an eleventh embodiment of the present invention.

### DESCRIPTION OF THE PREFERRED EMBODIMENTS

### EMBODIMENT 1

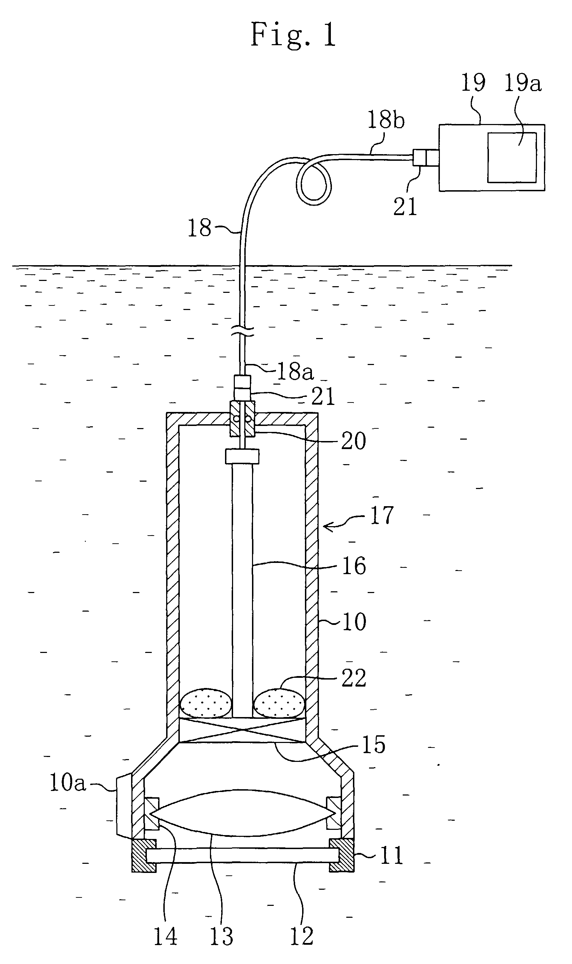

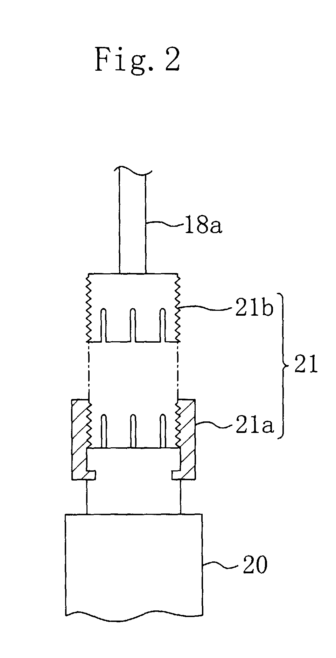

Hereinafter, an underwater imaging system according to a first embodiment of the present invention will be described with reference to Figures **1** and **2**.

Figure **1** illustrates an overall arrangement of an underwater imaging system adapted to watch a scene under or on the bottom of water or aquatic creatures like fishes living there downward, i.e., toward the bottom of the water.

As shown in Figure **1**, a metallic ring **11** is secured to the bottom of a waterproof, cylindrical housing case **10** made of a resin, and holds a transparent plate **12** made of transparent glass or resin. By securing the metallic ring **11** to the bottom of the housing case **10**, the transparent plate **12** of the housing case **10** can keep facing down toward the bottom of the water.

An optical element **13**, such as a collective lens, is held by a lens holder **14** over the transparent plate **12** inside the housing case **10** to produce an optical image of (i.e., to image) an object to be watched. The optical image produced by the optical element **13** is converted into signal charges and then into an electric signal by a photoelectric transducer **15** such as a charge-coupled device (CCD).

A signal processor **16**, which is formed on a printed wiring board, is mounted over the photoelectric transducer **15** inside the housing case **10**. The signal processor **16** transforms the electric signal, which have been generated by the photoelectric transducer **15**, into an electric video signal and outputs the signal.

The housing case **10**, optical element **13**, photoelectric transducer **15** and signal processor **16** together constitute an imager **17**.

One end **18a** of an electric signal line **18** extends inside the housing case **10** of the imager **17** downward from the top of the case **10**, and is connected to the signal processor **16**. The other end **18b** of the electric signal line **18** is connected to a receiver **19** disposed on the water or on the ground. In this arrangement, the electric video signal, which has been output from the signal processor **16**, is transmitted through the electric signal line **18** to the receiver **19** on the water or on the ground. Based on the electric video signal that has been received through the electric signal line **18**, the receiver **19** produces a video and presents the video on a display **19a**.

Since the receiver **19** is often used outdoors while it is bright, the display **19a** is preferably a cathode ray tube or a reflective liquid crystal display panel. Also, when the receiver **19** is used on board (i.e., on a boat or ship), the receiver **19** is preferably a head mount display (HMD) to prevent the user from getting seasick. This is because the user should look up at the display in such a situation.

A clamp **20** for holding the end **18a** of the electric signal line **18** via an o-ring is secured to the top of the waterproof case **10**. The clamp **20** also holds an external thread **21a** of a connector **21** shown in Figure **2**. An internal thread **21b** of the connector **21** is engaged with the end **18a** of the electric signal line **18**. When the external and internal threads **21a** and **21b** of the connector **21** are screwed up, the end **18a** of the electric signal line **18** is connected to the signal processor **16** via the clamp **20**. The other end **18b** of the electric signal line **18** is connected to the receiver **19** using also the connector **21** shown in Figure **21**.

Accordingly, the clamp **20** not only cushions the force applied to the end **18a** of the electric signal line **18** but also prevents water from entering the waterproof case **10**.

In other words, if each of these connectors **21** secured to the waterproof case **10** and the receiver **19** is disengaged into the external and internal threads **21a** and **21b**, then the underwater imaging system is broken up into the imager **17**, electric signal line **18** and receiver **19**. Accordingly, the electric signal line **18** can be of any arbitrary length.

A drying agent **22** such as silica gel is stored beside the photoelectric transducer **15** inside the housing case **10** to prevent the moisture of the air inside the housing case **10**, which has been cooled down in the water, from condensing into droplets of water.

A protrusion **10a** is provided at a predetermined position on the outer periphery of the housing case **10**. The protrusion **10a** enables the user to know easily which side of the object to be imaged by the imager **17** is up when the imager **17** is used on the water or on the ground.

The internal cross section of the housing case **10** is circular and the signal processor **16**, which is formed on a printed wiring board, is vertically mounted inside the housing case **10**. Accordingly, a relatively large cavity is formed inside the housing case **10**, and the specific gravity of the imager **17** is usually smaller than one. In this arrangement, however, the metallic ring **11** is secured to the bottom of the housing case **10**, and the specific gravity of the imager **17** is larger than one. Thus, the imager **17** can sink into the water due to its own weight when projected onto the water.

Also, the metallic ring **11** secured to the bottom of the housing case **10** can keep the transparent plate **12** facing down toward the bottom of the water. Thus, even when the imager **17** is swept by the tide or when the electric signal line **18** is twisted, the optical element **13** of the imager **17** can always capture the object to be imaged toward the bottom of the water. As a result, the receiver **19** can display the video of the object stably enough. Thus, the underwater imaging system according to the first embodiment is suitable for watching aquatic creatures like fishes living under or on the bottom of the water.

In the first embodiment, the metallic ring **11** is secured to the bottom of the housing case **10**. Alternatively, the specific gravity of the imager **17** may be increased to more than one by making the housing case **10** of a material with a specific gravity of more than one such as some metal and by making the cavity the inside of the housing case **10** much smaller.

According to the first embodiment, the optical element **13** of the imager **17** in the water produces an optical image of an object located under the imager **17**. Then, an electric video signal, which corresponds to the optical image produced, is transmitted through the electric signal line **18** to the receiver **19** on the water or on the ground. That is to say, the optical image produced is converted into an electric video signal and the signal is transmitted through the flexible electric signal line **18** to the receiver **19**. Thus, the imager **17** in the water can be controlled more easily.

In addition, since the electric signal line **18** is used as a substitute means for transmitting a video signal instead of an optical fiber, no converter needs to be built in the imager **17** for converting an electric signal into an optical signal. Therefore, the imager **17** can have its circuit configuration simplified and its size reduced.

### EMBODIMENT 2

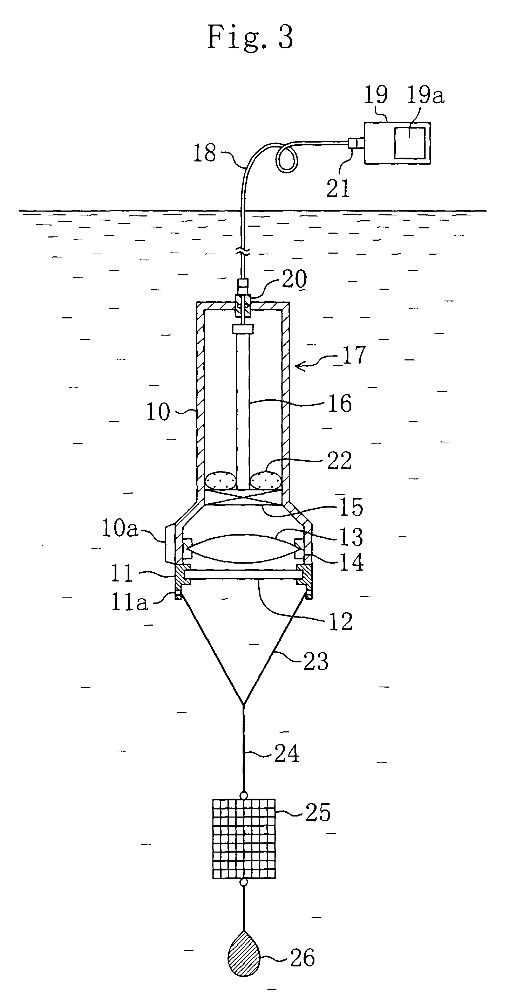

Next, an underwater imaging system according to a second embodiment of the present invention will be described with reference to Figure **3**. In describing the second embodiment, the same members as those used in the first embodiment illustrated in Figure **1** will be identified by the same reference numerals and the description thereof will be omitted herein.

The second embodiment is characterized in that a plurality of hook holes **11a** are provided for the lower part of the metallic ring **11**. A first group of fishlines **23** of an equal length is attached to the hook holes **11a** via rotatable swivels (not shown). The respective lower ends of the fishlines **23** of the first group are collected at a point, from which a second fishline **24** extends downward. A bait basket **25** is suspended from the lower end of the second fishline **24**. And a lead **26** is attached to the bottom of the bait basket **25**. Accordingly, the bait basket **25** is located just under the center of the transparent plate **12**, or the center of the optical element **13**.

According to the second embodiment, since the bait basket **25** is provided under the transparent plate **12** of the housing case **10**, the user can watch fishes rising to the bait stored in the bait basket **25** or having a bite of the bait.

Also, since the lead **26** is attached to the bottom of the bait basket **25**, the imager **17** and the bait basket **25** are both swept in the same direction even when the current is flowing fast. Thus, it is always possible to watch fishes rising to the bait stored in the bait basket **25** or biting at the bait.

### EMBODIMENT 3

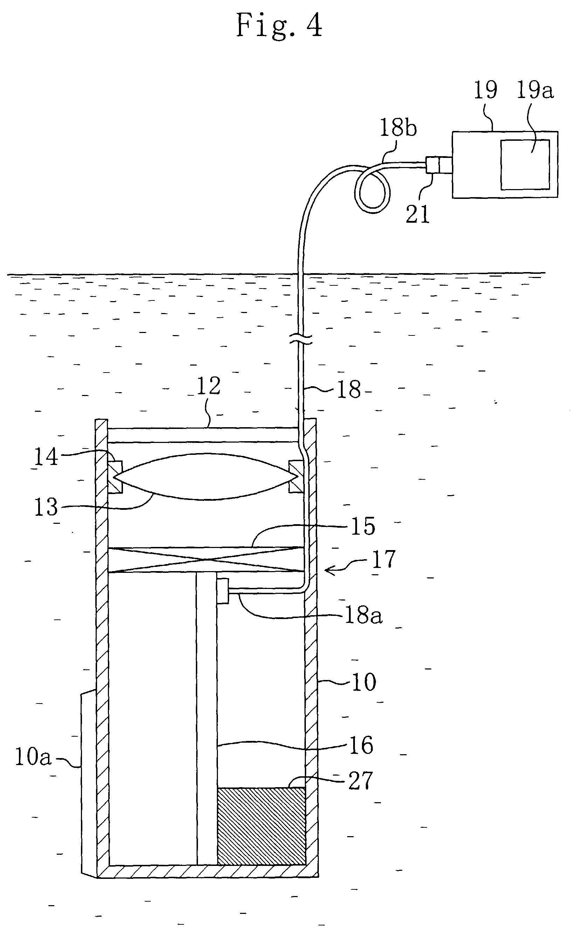

Next, an underwater imaging system according to a third embodiment of the present invention will be described with reference to Figure **4**. In describing the third embodiment, the same members as those used in the first embodiment illustrated in Figure **1** will be identified by the same reference numerals and the description thereof will be omitted herein.

Figure **4** illustrates an overall arrangement of an underwater imaging system adapted to watch aquatic creatures like fishes living underwater upward, i.e., toward the surface of the water.

The third embodiment is characterized in that the transparent plate **12** made of transparent glass or resin is secured to the top of the waterproof, cylindrical housing case **10** made of a resin. The optical element **13**, such as a collective lens, is held by the lens holder **14** under the transparent plate **12** inside the housing case **10** to produce an optical image of an object to be watched. The optical image produced by the optical element **13** is converted into an electric signal by the photoelectric transducer **15** such as a CCD.

The signal processor **16**, which is formed on a printed wiring board, is disposed under the photoelectric transducer **15** inside the housing case **10**. The signal processor **16** transforms the electric signal, which have been generated by the photoelectric transducer **15**, into an electric video signal and then outputs the signal.

The housing case **10**, optical element **13**, photoelectric transducer **15** and signal processor **16** together constitute the imager **17**.

One end **18a** of the electric signal line **18** is connected to the signal processor **16** inside the housing case **10**. The other end **18b** of the electric signal line **18** is connected to the receiver **19** disposed on the water or on the ground via the connector **21**. Inside the housing case **10**, the electric signal line **18** is fixed in the gap between the housing case **10** and photoelectric transducer **15**, in a recess provided on the sidewall of the housing case **10** and in the gap between the housing case **10** and transparent plate **12**. Then, the electric signal line **18** is extended upward through the transparent plate **12** to the outside.

A metallic lead **27** is placed on the bottom of the housing case **10** and under the electric signal line **18** fixed.

According to the third embodiment, the transparent plate **12** and optical element **13** are provided in the upper part of the housing case **10** and the metallic lead **27** is placed on the bottom of the housing case **10**. Thus, the transparent plate **12** and optical element **13** both face up toward the surface of the water.

Also, the electric signal line **18** is fixed on the right- or left-hand side of the sidewall of the housing case **10** and the metallic lead **27** is placed right under the electric signal line **18** fixed inside the housing case **10**. Accordingly, when the imager **17** is suspended in the water by the electric signal line **18**, a line connecting the electric signal line **18** and the metallic lead **27** together extends vertically against the surface of the water. Thus, the shaft axis of the imager **17** and the optical axis of the optical element **13** can be kept vertical to the surface of the water.

Consequently, the underwater imaging system according to the third embodiment enables the user to watch aquatic creatures like fishes moving over the imager **17**.

When it gets dark in the water in the evening, the fishes cannot be watched any longer for lack of light with the optical element **13** facing down toward the bottom of the water. In contrast, when the optical element **13** faces up toward the surface of the water as in the third embodiment, the user still can watch the aquatic creatures like fishes even in the evening.

Also, while it is bright on the water in the daytime, the user can watch the aquatic creatures backlighted with the optical element **13** facing up toward the surface of the water. As a result, a fanciful image can be obtained.

### EMBODIMENT 4

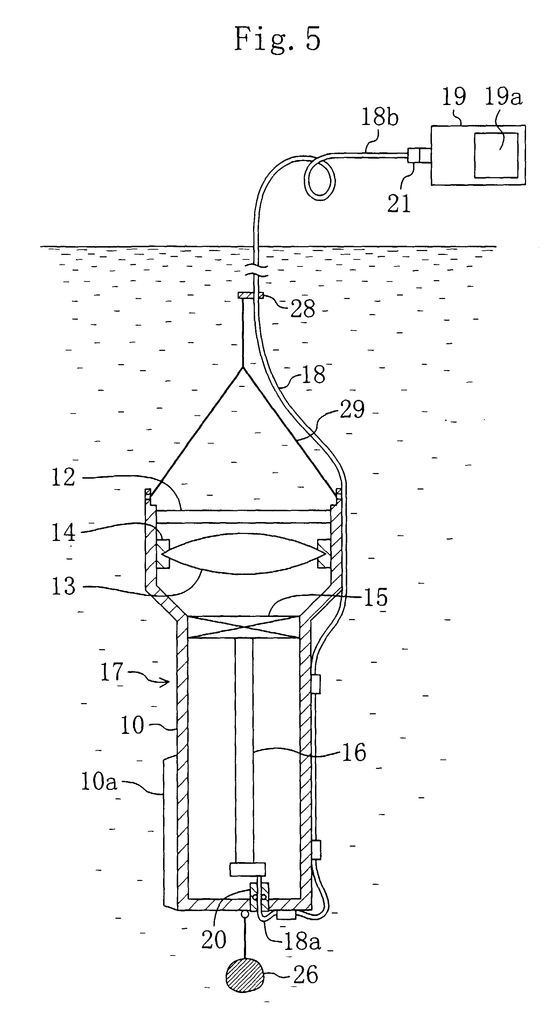

Next, an underwater imaging system according to a fourth embodiment of the present invention will be described with reference to Figure **5**. In describing the fourth embodiment, the same members as those used in the first embodiment illustrated in Figure **1** will be identified by the same reference numerals and the description thereof will be omitted herein.

According to the fourth embodiment, the transparent plate **12** and optical element **13** are both provided in the upper part of the housing case **10** as in the third embodiment.

The fourth embodiment is characterized in that the electric signal line **18** is extended through the bottom of the housing case **10** to the outside. A holder **28** is attached to a midway point of the electric signal line **18**. And a plurality of suspension strings **29** extend from the holder **28** toward the bottom of the water to support the outer periphery of the housing case **10** at respective lower ends thereof.

Also, the metallic lead **26** is suspended from the center of the bottom of the housing case **10**.

Accordingly, the transparent plate **12** and the optical element **13** both face up toward the surface of the water. In addition, a line connecting the holder **28** and the metallic lead **26** together extends vertically against the surface of the water. Thus, the shaft axis of the imager **17** and the optical axis of the optical element **13** can be kept vertical to the surface of the water.

Therefore, the underwater imaging system according to the fourth embodiment enables the user to watch aquatic creatures like fishes moving over the imager **17**.

According to the fourth embodiment, the end **18a** of the electric signal line **18** is passed through the bottom of the housing case **10** upward and connected to the signal processor **16**. And part of the electric signal line **18** between the holder **28** and the end **18a** is loosely attached to the outer surface of the housing case **10**. Thus, compared to the electric signal line **18** extended inside the housing case **10** from the gap between the housing case **10** and the transparent plate **12**, the waterproofness of the housing case **10** around the end **18a** of the electric signal line **18** can be improved. This is because the clamp **20** can be attached to the housing case **10** according to this embodiment.

### EMBODIMENT 5

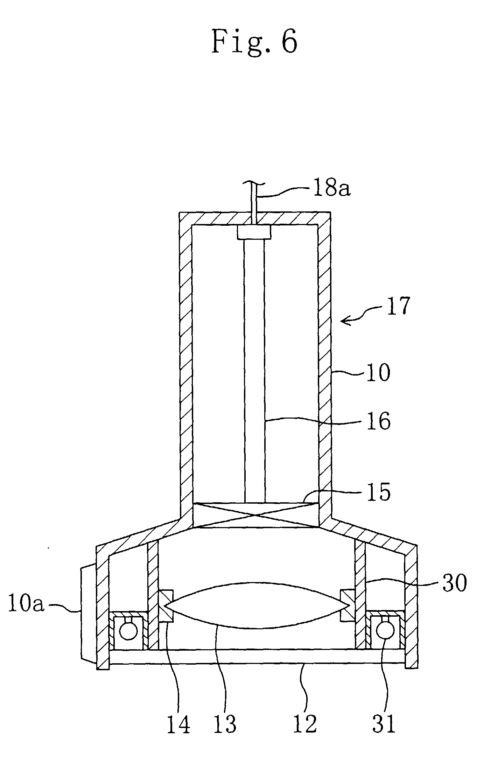

Next, an underwater imaging system according to a fifth embodiment of the present invention will be described with reference to Figure **6**.

In describing the fifth embodiment, the same members as those used in the first embodiment illustrated in Figure **1** will be identified by the same reference numerals and the description thereof will be omitted herein.

The basic structure of the system according to the fifth embodiment is similar to the counterpart of the first embodiment illustrated in Figure **1**. Thus, the illustration of the electric signal line **18** and the receiver **19** is omitted in Figure **6**.

The fifth embodiment is characterized in that a cylindrical light-blocking plate **30** is provided on the inner bottom of the housing case **10** and that light emitters **31** such light-emitting diodes or lamps are provided between the sidewall of the housing case **10** and the light-blocking plate **30**.

The light emitters **31** can illuminate a region under the transparent plate **12**. Accordingly, aquatic creatures can be watched even at night or in the deep water.

Also, since the light-blocking plate **30** is provided between the optical element **13** and the light emitters **31**, it is possible to prevent the light, which has been emitted from the light emitters **31**, from entering the photoelectric transducer **15** by way of the optical element **13**.

### EMBODIMENT 6

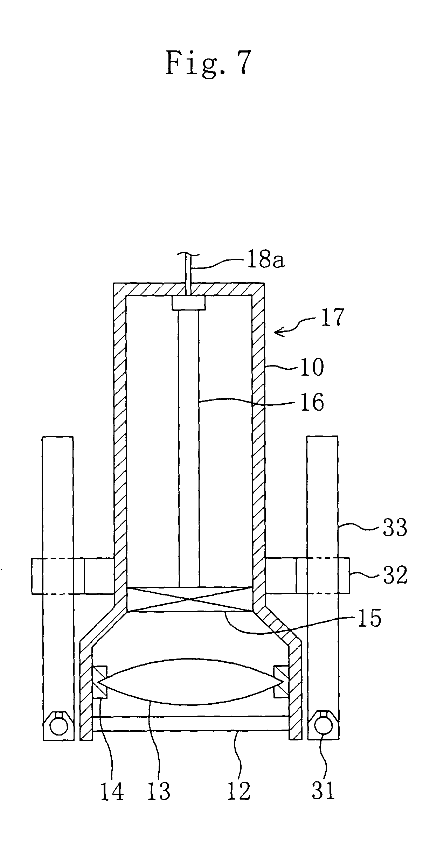

Next, an underwater imaging system according to a sixth embodiment of the present invention will be described with reference to Figure **7**.

In describing the sixth embodiment, the same members as those used in the first embodiment illustrated in Figure **1** will be identified by the same reference numerals and the description thereof will be omitted herein.

The basic structure of the system according to the sixth embodiment is similar to the counterpart of the first embodiment. Thus, the illustration of the electric signal line **18** and the receiver **19** is omitted in Figure **7**.

The sixth embodiment is characterized in that a plurality of holders **32** such as spring catches are secured to the outer surface of the sidewall of the housing case **10**. An illuminator **33** including a battery-driven light emitter **31**, e.g., a waterproof flashlight, is held by each of these holders **32** in a removable position.

The illuminators **33** can illuminate a region under the transparent plate **12**. Accordingly, aquatic creatures can be watched even at night or in the deep water.

Also, the illuminators **33** are held by the holders **32** in a removable position. Thus, the illuminators **33** may be inserted only when needed. That is to say, the weight of the imager can be reduced when the lights are not needed. In addition, the number of the illuminators **33** is adjustable depending on the brightness in the water.

### EMBODIMENT 7

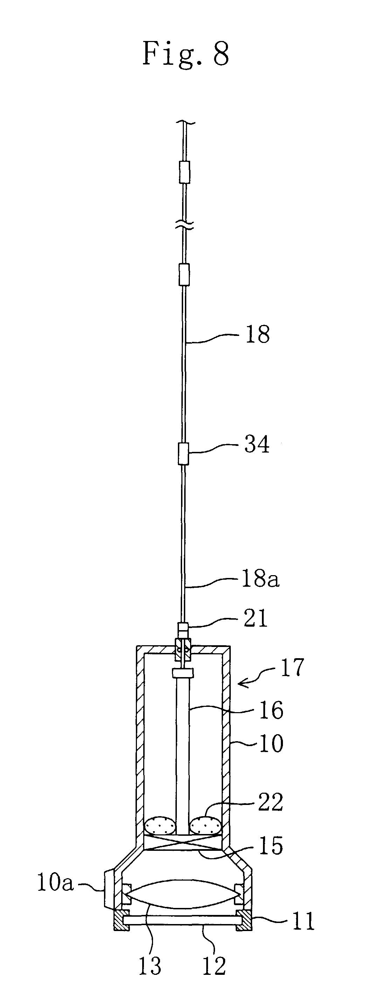

Next, an underwater imaging system according to a seventh embodiment of the present invention will be described with reference to Figure **8**.

In describing the seventh embodiment, the same members as those used in the first embodiment illustrated in Figure **1** will be identified by the same reference numerals and the description thereof will be omitted herein.

The basic structure of the system according to the seventh embodiment is similar to the counterpart of the first embodiment. Thus, the illustration of the receiver **19** is omitted in Figure **8**.

The seventh embodiment is characterized in that the electric signal line **18** is provided with marks **34**, which are disposed at regular intervals, e.g., every 1 meter. Accordingly, by counting the number of the marks **34** or by looking at a numeral printed on one of the marks **34**, the distance between the imager **17** and the surface of the water can be known easily. In addition, the imager **17** can be sunk to exactly where a shoal of fishes is located.

Each of these marks **34** may be represented as a two-digit color code, e.g., 0 as black, 1 as brown, 2 as red, etc. In such a case, the distance between the imager **17** and the surface of the water can be known easily by the specific color code of the mark **34** nearest the surface of the water.

### EMBODIMENT 8

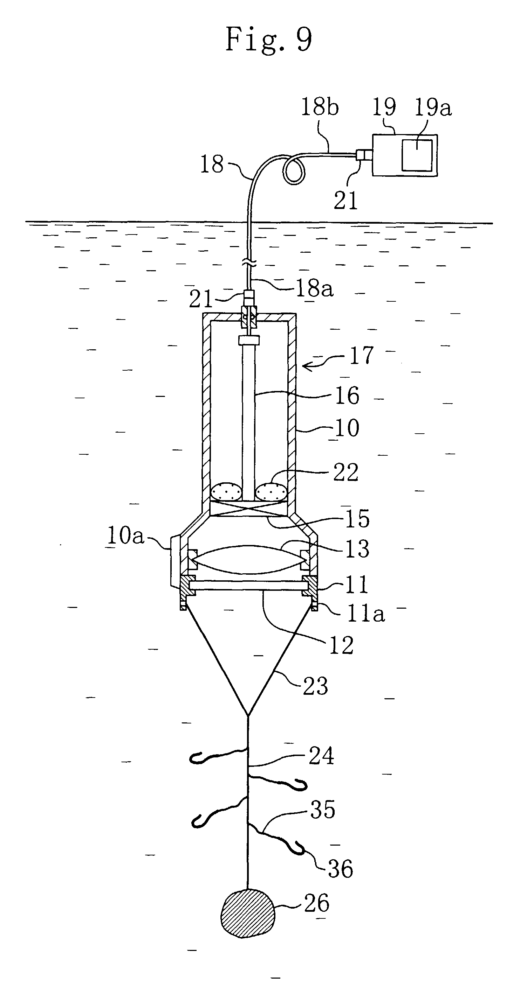

Next, an underwater imaging system according to an eighth embodiment of the present invention will be described with reference to Figure **9**.

In describing the eighth embodiment, the same members as those used in the first embodiment illustrated in Figure **1** will be identified by the same reference numerals and the description thereof will be omitted herein.

According to the eighth embodiment, the metallic ring **11** is secured to the bottom of the housing case **10** as in the first embodiment. Thus, both the transparent plate **12** and the optical element **13** always face down toward the bottom of the water.

The eighth embodiment is characterized in that a plurality of hook holes **11a** are provided for the lower part of the metallic ring **11** as in the second embodiment. A first group of fishlines **23** of an equal length is attached to the hook holes **11a** via rotatable hooks (not shown). The respective lower ends of the fishlines **23** of the first group are collected at a point, from which a second fishline **24** extends downward. A lead **26** is suspended from the lower end of the second fishline **24**. Leaders **35** are attached to respective midway points of the second fishline **24**. And a fishhook **36** is attached to the end of each leader **35**.

According to the eighth embodiment, even when the imager **17** is swept by the tide or when the electric signal line **18** is twisted, the optical element **13** of the imager **17** can always capture the object to be imaged, i.e., the fishhooks **36**, toward the bottom of the water. Thus, the user can watch a fish biting at the bait attached to one of the fishhook **36**.

### EMBODIMENT 9

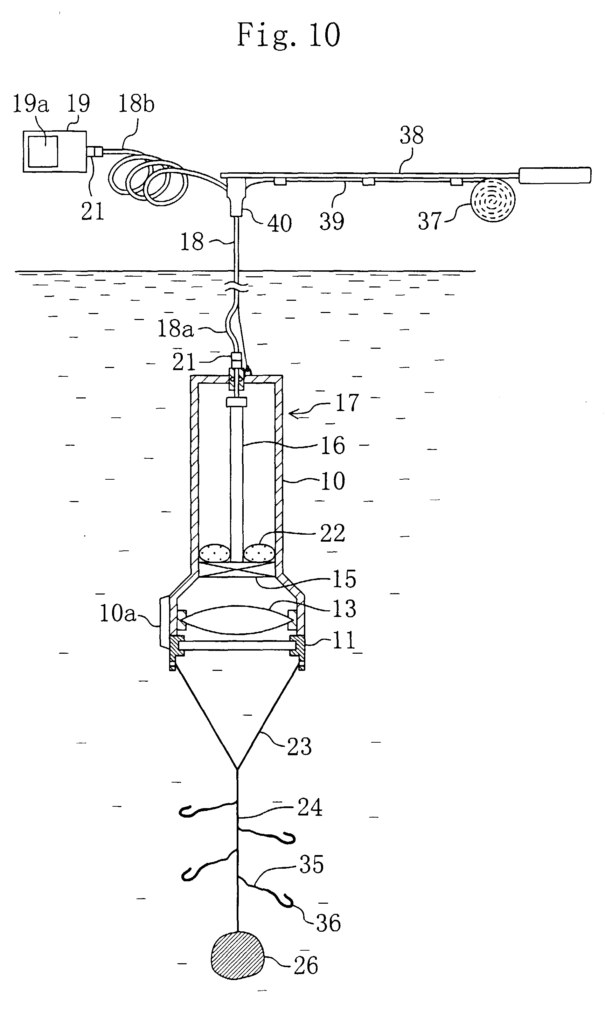

Next, an underwater imaging system according to a ninth embodiment of the present invention will be described with reference to Figure **10**.

In describing the ninth embodiment, the same members as those used in the first and eighth embodiments illustrated in Figures **1** and **9**, respectively, will be identified by the same reference numerals and the description thereof will be omitted herein.

According to the ninth embodiment, the metallic ring **11** is secured to the bottom of the housing case **10** as in the first embodiment. Thus, both the transparent plate **12** and the optical element **13** always face down toward the bottom of the water.

Also, as in the eighth embodiment, the second fishline **24** extends downward from the collected lower ends of the first group of fishlines **23**. The lead **26** is also suspended from the lower end of the second fishline **24**. The leaders **35** are also attached to respective midway points of the second fishline **24**. And the fishhook **36** is attached to the end of each of these leaders **35**.

The underwater imaging system according to the ninth embodiment is characterized by further including a fishing rod **38** with a reel **37**. At a far end of the fishing rod **38**, a coupler **40** for coupling or separating a main fishline **39**, which extends from the reel **37**, to/from the electric signal line **18** is provided.

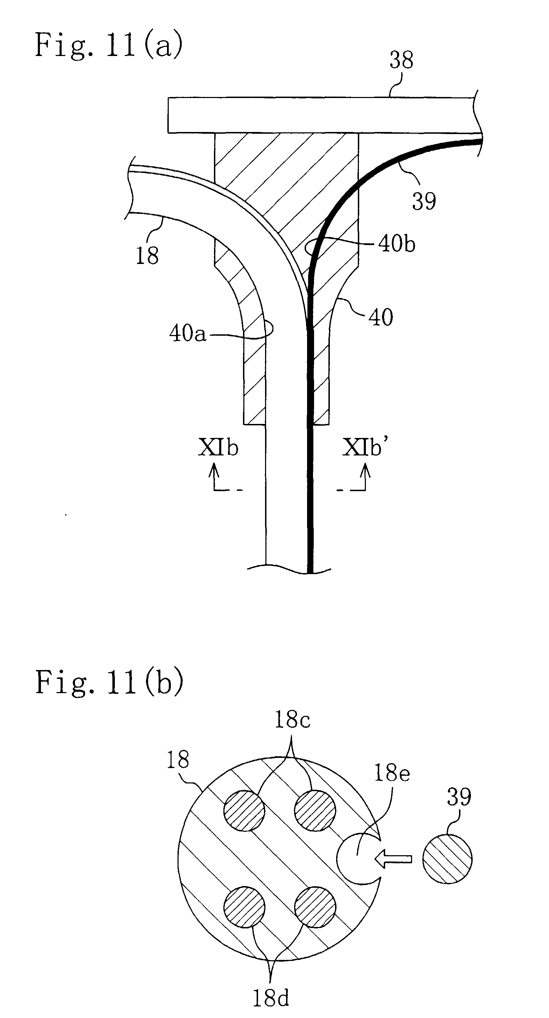

Figure **11(a)** illustrates the coupler **40** and the electric signal line **18** in further detail. Figure **11(b)** illustrates a cross section of the electric signal line **18** taken along the line **XIb-XIb** in Figure **11(a)**.

As shown in Figure **11(a)**, first and second curved guide holes **40a** and **40b** are provided inside the coupler **40**. Specifically, the first guide hole **40a** extends downward from the upper left part of the coupler **40** and passes through its bottom. The second guide hole **40b** extends downward from the upper right part of the coupler **40** and joins with the first guide hole **40a**. The electric signal line **18** and the main fishline **39** are inserted into, and passed through, the first and second guide holes **40a** and **40b**, respectively.

As shown in Figure **11(b)**, a pair of power lines **18c** for supplying power and a pair of signal lines **18d** for transmitting an electric signal therethrough are inlaid in the electric signal line **18**. Also, a groove **18e**, in which the main fishline **39** is installable, is formed in the electric signal line **18**.

Accordingly, if the electric signal line **18** and the main fishline **39** are reeled off downward inside the first and second guide holes **40a** and **40b**, respectively, the main fishline **39** is installed inside the groove **18e** of the electric signal line **18**. After that, the electric signal line **18** and the main fishline **39** can be reeled off downward as a combined line. On the other hand, while these lines **18** and **39** are being reeled up, both of these lines **18** and **39** move upward. Just before these lines **18** and **39** pass the coupler **40**, these lines **18** and **39** are separated from each other and eventually the main fishline **39** is reeled up around the reel **37**.

In the structure according to the eighth embodiment, the imager **17** is suspended by the thick electric signal line **18**. Thus, even when a fish bites at the bait on a fishhook **36**, it is hard for the user to feel a tug on the line **18** or to land the fish. In contrast, according to the ninth embodiment, the imager **17** and the first and second fishlines **23** and **24** are all supported by the main fishline **39**. Thus, it is easier for the user to feel the tug or to land the fish. That is to say, the user can perceive a fish rising to a hook **36** not only by the video but also by the tug, thus doubling the pleasure of fishing.

### EMBODIMENT 10

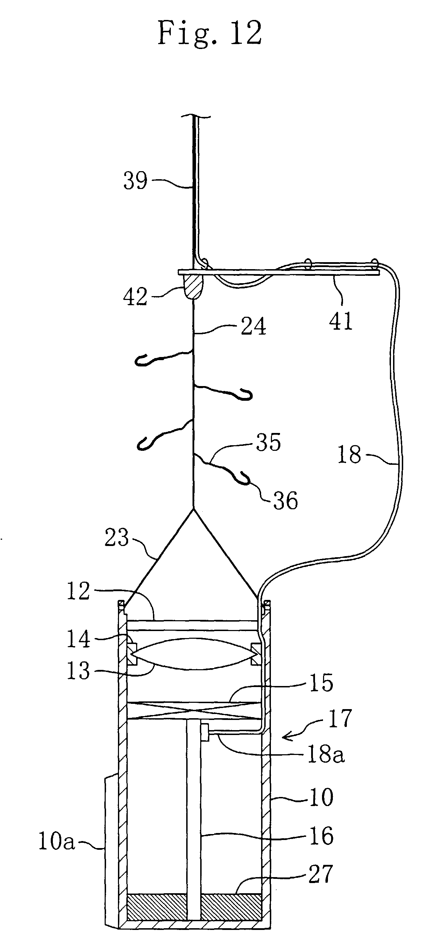

Next, an underwater imaging system according to a tenth embodiment of the present invention will be described with reference to Figure **12**.

In describing the tenth embodiment, the same members as those used in the third and eighth embodiments illustrated in Figures **4** and **9**, respectively, will be identified by the same reference numerals and the description thereof will be omitted herein. Also, that part of the system over the line of limit of the interrupted view in Figure **12** is the same as the counterpart in Figure **10**, and the illustration thereof is omitted.

According to the tenth embodiment, both the transparent plate **12** and the optical element **13** are provided in the upper part of the housing case **10** as in the third embodiment. In addition, a metallic lead **27** is placed over the entire bottom of the housing case **10**.

As described above, the fishing rod **38** with the reel **37** is also provided as in the ninth embodiment illustrated in Figure **10**. At a far end of the fishing rod **38**, the coupler **40** for coupling or separating the main fishline **39**, which extends from the reel **37**, to/from the electric signal line **18** is also disposed.

The tenth embodiment is characterized in that a horizontally extending signal line supporting member **41** and a combiner **42** are further secured to the lower end of the main fishline **39**. The first group of fishlines **23** extend upward from the top of the housing case **10** and the respective upper ends thereof are collected at a point, from which the second fishline **24** extends upward. The leaders **35** are attached to respective midway points of the second fishline **24**. And the fishhook **36** is secured to the end of each leader **35**.

Accordingly, both the transparent plate **12** and the optical element **13** can always face up toward the surface of the water. And the shaft axis of the imager **17** and the optical axis of the optical element **13** can both be kept vertical against the surface of the water.

The electric signal line **18** is supported by the signal line supporting member **41** so as to extend horizontally rightward and then vertically downward beside the leaders **35**. Inside the housing case **10**, the line **18** is fixed in the gap between the housing case **10** and the transparent plate **12**, in the recess provided in the sidewall of the housing case **10** and in the gap between the housing case **10** and the photoelectric transducer **15**.

According to the tenth embodiment, since the electric signal line **18** is not located near and over the transparent plate **12**, a fish is more likely to approach the bait attached to the hooks **36** and the video of the electric signal line **18** is not captured. Thus, the user can enjoy watching a fish rising to the hooks **36** with the obstacle got rid of.

### EMBODIMENT 11

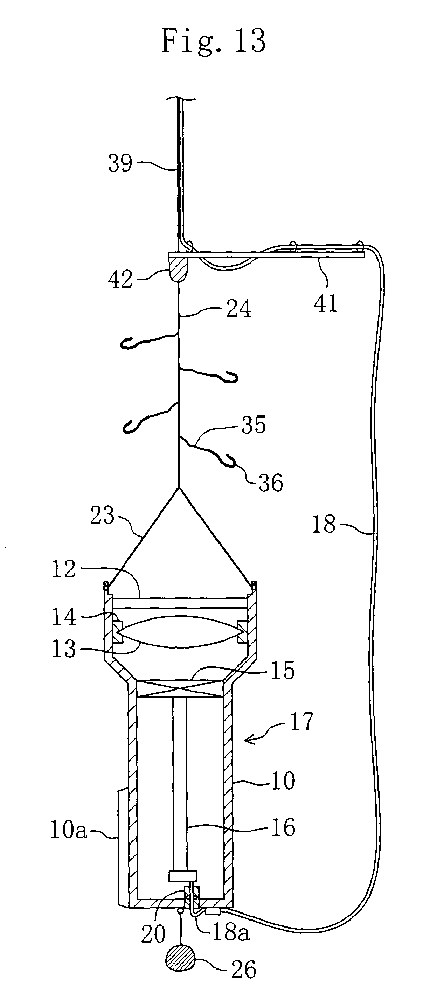

Next, an underwater imaging system according to an eleventh embodiment of the present invention will be described with reference to Figure **13**.

In describing the eleventh embodiment, the same members as those used in the fourth, eighth and tenth embodiments illustrated in Figures **5**, **9** and **12**, respectively, will be identified by the same reference numerals and the description thereof will be omitted herein. Also, that part of the system over the line of limit of the interrupted view in Figure **13** is the same as the counterpart in Figure **10**, and the illustration thereof is omitted.

According to the eleventh embodiment, the fishing rod **38** with the reel **37** is also provided as in the ninth embodiment illustrated in Figure **10**. At a far end of the fishing rod **38**, the coupler **40** for coupling or separating the main fishline **39**, which extends from the reel **37**, to/from the electric signal line **18** is disposed.

Also, as in the tenth embodiment illustrated in Figure **12**, the horizontally extending signal line supporting member **41** is further secured to the lower end of the main fishline **39**. The electric signal line **18** is loosely held by the signal line supporting member **41** to extend horizontally rightward and then vertically downward. Furthermore, as in the fourth embodiment, the end **18a** of the electric signal line **18** is passed upward through the bottom of the housing case **10** and connected to the signal processor **16**.

Thus, according to the eleventh embodiment, the waterproofness of the housing case **10** around the end **18a** of the electric signal line **18** can be improved, because the clamp **20** is provided as in the fourth embodiment. In addition, as in the tenth embodiment, a fish is more likely to approach the bait attached to the hooks **36** and the video of the electric signal line **18** is not captured. Thus, the user can enjoy watching a fish rising to the hooks **36** with the obstacle got rid of.

## Claims

1. An underwater imaging system comprising:
an imager, which is disposed in the water for imaging an underwater scene;
a receiver, which is disposed on the water or on the ground, includes a power supply and displays the underwater scene imaged by the imager as a video; and
an electric signal line for connecting the imager and the receiver together, supplying power from the power supply of the receiver to the imager and transmitting an electric video signal from the imager to the receiver,
wherein the imager includes:
a waterproof housing case with a transparent plate;
an optical element disposed inside the housing case for producing an optical image of the underwater scene seen through the transparent plate;
a photoelectric transducer disposed inside the housing case for creating signal charges corresponding to the optical image produced by the optical element and generating an electric signal based on the signal charges; and
a signal processor disposed inside the housing case for transforming the electric signal that has been generated by the photoelectric transducer into the electric video signal and for outputting the electric video signal through the electric signal line.

2. The system of Claim 1, further comprising means for adaptively moving the barycenter of the imager such that the transparent plate faces down toward the bottom of the water.

3. The system of Claim 2, wherein one end of the electric signal line, which end is closer to the imager, extends inside the housing case downward from the top of the case and is connected to the signal processor.

4. The system of Claim 2, further comprising:
bait storage for storing bait therein; and
means attached to the bottom of the housing case for holding the bait storage at a position under the center of the transparent plate and making the bait storage face down toward the bottom of the water.

5. The system of Claim 2, further comprising:
a fishline with fishhooks, which is attached to the bottom of the housing case; and
a lead for holding the fishline at a position under the center of the transparent plate and making the fishline face down toward the bottom of the water.

6. The system of Claim 5, further comprising:
a main fishline for suspending and holding the housing case in the water; and
a coupler for coupling the electric signal line and the main fishline together when these lines move downward and for separating the electric signal line and the main fishline from each other when these lines move upward.

7. The system of Claim 1, further comprising means for adaptively moving the barycenter of the imager such that the transparent plate faces up toward the surface of the water.

8. The system of Claim 7, wherein one end of the electric signal line, which end is closer to the imager, extends inside the housing case downward from the top of the case and is connected to the signal processor.

9. The system of Claim 7, wherein one end of the electric signal line, which end is closer to the imager, extends inside the housing case upward from the bottom of the case and is connected to the signal processor, and
wherein the electric signal line is provided with a holder for holding the housing case.

10. The system of Claim 7, further comprising:
a main fishline for suspending and holding the housing case in the water;
a fishline with fishhooks, which is held by the main fishline at a position closer to the surface of the water over the center of the transparent plate; and
a signal line supporting member, which is attached to the main fishline so as to extend horizontally and supports the electric signal line such that the signal line passes beside the fishhooks.

11. The system of Claim 10, further comprising a coupler for coupling the electric signal line and the main fishline together when these lines move downward and for separating the electric signal line and the main fishline from each other when these lines move upward.

12. The system of Claim 1, wherein the electric signal line includes marks provided at regular intervals.

13. The system of Claim 1, further comprising a main fishline for suspending and holding the housing case in the water,
wherein the electric signal line is provided with a groove in which the main fishline is storable.

14. The system of Claim 1, wherein the imager further comprises:
a light emitter disposed inside of the housing case for illuminating a region in front of the transparent plate; and
a light-blocking plate disposed inside the housing case for blocking light between the light emitter and the optical element.

15. The system of Claim 1, wherein imager further comprises means for holding a removable illuminator for illuminating a region in front of the transparent plate, the holding means being disposed on an outer side of the housing case.

16. The system of Claim 1, wherein the imager further comprises a drying agent placed inside the housing case.

17. The system of Claim 1, wherein the imager is provided with a mark on an outer side of the housing case, the mark indicating which side of the video imaged by the imager is up.

18. The system of Claim 1, wherein the periphery of the housing case is provided with holes, on/from which hooks are attachable and removable.
